# EUROPÄISCHE PATENTSCHRIFT

(11) **EP 1 623 867 B1**
(45) Veröffentlichungstag und Bekanntmachung des Hinweises auf die Patenterteilung: **19.01.2011**
(21) Anmeldenummer: 05107225.4
(22) Anmeldetag: 05.08.2005
(51) Int. Cl.: B60N 2/07

(54) **Rollenführung für längsverstellbare Fahrzeugsitze**
Roller guide for longitudinally adjustable seat
Guidage à éléments roulants pour sièges de véhicule

(30) Priorität: 07.08.2004 DE 102004038507
(43) Veröffentlichungstag der Anmeldung: 08.02.2006
(73) Patentinhaber: GRAMMER AG, 92224 Amberg (DE)
(72) Erfinder: Kohl, Josef, 92242 Hirschau (DE); Haner, Markus, 92637 Rothenstadt (DE)
(74) Vertreter: Hannke, Christian

(56) Entgegenhaltungen:
- US-A- 3 265 450
- US-B1- 6 200 032

## Beschreibung

Die Erfindung betrifft eine Rollenführung für verstellbare Fahrzeugsitze mit mindestens einer seitlich offenen Führungsschiene und mit mindestens zwei in der Führungsschiene abrollenden mit dem Fahrzeugsitz verbundenen Laufrollen gemäß dem Oberbegriff des Patentanspruches 1.

Herkömmlicherweise werden für das Führen von Fahrzeugsitzen innerhalb eines Fahrzeuges U-förmige Führungsschienen zur Führung von darin sich abrollenden Laufrollen verwendet, wobei die Führungsschienen parallel zueinander verlaufend mit einer Karosserie des Fahrzeuges und die Laufrollen mit einem Sitzgestell des Fahrzeugsitzes verbunden sind. Alternativ können die Führungsschienen bereits im Sitzgestell integriert sein.

Derartige Führungsanordnungen erfordern zwingend die Anordnung eines Zwischenraumes zwischen einer Innenseite des U-förmigen Profils der Führungsschiene und einer Lauffläche der sich darin abrollenden Laufrolle, da die Abrollrichtungen der Laufrolle an der Ober- und der Unterseite bei einer Bewegungsrichtung der Laufrolle entgegengesetzt sind. Das heißt, eine Abrollbewegung der Rolle innerhalb der Führungsschiene ist nur bei Anliegen der Rolle an einer der Führungsschienenseiten, nämlich deren Unter- oder deren Oberseite, möglich. Ansonsten würde bei Anliegen von sowohl der Ober- als auch der Unterseite der Führungsschiene an der Laufrolle lediglich eine Gleitbewegung der Laufrolle innerhalb der Führungsschiene, jedoch keine Abrollbewegung möglich sein. Aufgrund des zwingend notwendigen Zwischenraums ist - insbesondere nach längerzeitigem Gebrauch des Fahrzeugsitzes - ein Spiel zwischen Führungsschienen und Laufrollen gegeben.

Hinzu kommt, dass bei derartigen Rollenführungen nur geringe Axialkräfte, also seitlich auf die Führungsschiene wirkende Kräfte, mittels der Laufrollen aufgenommen werden können. Dies hat oft eine einseitige Abnutzung der Laufrollen bei Auftreten von Axialkräften zur Folge. Daraus ergibt sich ein ungewolltes Spiel zwischen Laufrollen und Führungsschiene in axialer und auch in radialer Richtung.

Aus US 6,264,180 B1 ist eine Rollenführung für verstellbare Fahrzeugsitze bekannt, bei der an jedem Ende einer jeden Achse eines Sitzgestelles des Fahrzeugsitzes zwei einzelne oder eine zweigeteilte Rolle angebracht sind/ist, die mittels eines Einstellmechanismusses in ihrem axialen Abstand zu einer Führungsschiene, in der sie abrollen/abrollt, eingestellt werden können/kann. Die Rollen sind als zylinderförmige Rollen ausgebildet und drücken bei einer axialen Kraftbeaufschlagung gegen eine stirnseitige Innenwand der Führungsschiene, so dass die axialen Kräfte ausschließlich über die stirnseitige Innenwand aufgenommen werden. Dies führt zu ungewollten Reibungskräften und einer ungewollt hohen Abnutzung dieser Innenwand und der dagegendrückenden Rollen.

Aus US 6 200 032 B1 ist ein Rollenführung gemäß dem Oberbegriff des Anspruch 1 bekannt.

Demzufolge liegt der vorliegenden Erfindung die Aufgabe zugrunde, eine Rollenführung für verstellbare Fahrzeugsitze zur Verfügung zu stellen, die ein spielfreies und nahezu verschleißfreies Abrollen von Rollen innerhalb von Führungsschienen ermöglicht.

Diese Aufgabe wird gemäß den Merkmalen des Patentanspruches 1 gelöst.

Ein wesentlicher Punkt der Erfindung liegt darin, dass bei einer Rollenführung für verstellbare Fahrzeugsitze mit mindestens einer zumindest teilweise seitlich offenen Führungsschiene und mit mindestens zwei in der Führungsschiene abrollenden mit dem Fahrzeugsitz über eine gemeinsame Achse verbundenen Laufrollen mindestens eine der Laufrollen kegel- oder kegelstumpfförmig ausgebildet ist, wobei deren Kegelmantel als Lauffläche der Laufrolle entlang einer mit einem Winkel zum Längsverlauf der Achse angeordneten Innenwand der Führungsschiene abrollbar ist. Sofern die Führungsschiene innenseitig einen trapezförmigen Querschnitt aufweist, kann an dessen erstem Schenkel die Lauffläche der ersten Rolle und an dessen zweiten Schenkel die Lauffläche der zweiten Rolle anliegen.

Da der erste Schenkel einen ersten Winkel und der zweite Schenkel einen zu dem ersten Winkel unterschiedlichen zweiten Winkel mit einer Achse einschließt, auf welcher beide Laufrollen koaxial angebracht sind, wird es auf einfache Weise ermöglicht, dass die Lauffläche der ersten Laufrolle durch deren Anliegen entlang der oberen Führungsschienenschenkelseite sich während der Abrollbewegung in die eine Drehrichtung und die zweite Laufrolle durch Anliegen deren Lauffläche an der unteren Führungsschienenschenkelseite in eine entgegengesetzte Drehrichtung bewegen kann. Diese entgegengesetzten Drehbewegungen beeinträchtigen sich gegenseitig nicht nachteilhaft, da beide Schenkelseiten mit unterschiedlichen Winkeln angeordnet sind und insofern nur diejenige Lauffläche der Laufrollen an derjenigen Schenkelseite anliegt, deren Winkel dem Winkel der jeweiligen Lauffläche entspricht.

Entscheidend hierbei ist, dass die auf der Achse endseitig angeordnete erste Laufrolle mit geringerem Durchmesser bezüglich ihrer abgewinkelten Lauffläche derjenigen Schenkelseite des trapezförmigen Querschnitts der Führungsschiene zugeordnet ist, dessen erster Winkel größer als der zweite Winkel des zweiten Schenkels ist. Demzufolge weist die zweite Laufrolle eine Lauffläche auf, die weniger abgewinkelt, also weniger kegelförmig, ausgebildet ist und deren Winkel dem zweiten Winkel, welcher der zweite Schenkel mit der Achse einschließt, entspricht. Dieser zweite Winkel kann in einem Winkelbereich von 0° - 80° liegen, also einen zur Grundlinie des Trapezes im rechten Winkel angeordneten Schenkel darstellen. Dies hätte eine Ausbildung der zweiten Laufrolle in Zylinderform, also ohne abgewinkelte Lauffläche, zur Folge.

Der erste Winkel des ersten Schenkels hingegen liegt in einem Winkelbereich von vorzugsweise 1° - 80°.

Alternativ kann die endseitig angeordnete erste Laufrolle zylinderförmig ausgebildet sein und derjenigen Schenkelseite der Führungsschiene zugeordnet sein, dessen erster Winkel kleiner als der zweite Winkel des zweiten Schenkels, bzw. null ist. Demzufolge liegt der erste Winkel in einem Winkelbereich von 0° - 80° und der zweite Winkel in einem Winkelbereich von 1° - 80°.

Aufgrund der trapezförmigen Ausbildung der Führungsschiene und der komplementär dazu ausgebildeten vorzugsweise koaxial angeordneten Laufrollen in Kombination mit einer Federbeaufschlagung der Laufrollen ist es möglich, eine zuverlässige und dauerhafte Führung der Laufrollen innerhalb der Führungsschienen ohne Spiel sowohl in radialer als auch in axialer Richtung bezogen auf vorzugsweise 2 Achsen eines Fahrzeugsitzes zu erhalten. Alternativ können die Laufrollen auf zwei verschiedenen parallel zueinander verlaufenden Achsen angeordnet sein.

Gemäß einer bevorzugten Ausführungsform ist die zweite Laufrolle zur zusätzlichen Aufnahme von Axialkräften mit einem schulterförmigen Abschnitt ausgebildet, dessen Durchmesser größer als der Durchmesser der restlichen Laufrolle ist und der an einer zur Fahrzeugsitzmitte hin gerichteten Stützfläche der Führungsschiene anliegt. Eine derartige Stützfläche ist vorzugsweise parallel zu der Grundlinie des Trapezes ausgerichtet.

Um eine Federbeaufschlagung und eine dauerhaft ausreichende Beabstandung der beiden Laufrollen zu erreichen, kann zwischen den beiden Laufrollen mindestens ein Federelement, beispielsweise eine Tellerfeder oder sonstige Ringelemente angeordnet sein. Auf diese Weise werden die Laufflächen der Laufrollen zuverlässig an den schenkelförmigen Innenseiten der Führungsschiene gehalten, um eine Rollbewegung der Laufrollen bei einem Verstellen des Fahrzeugsitzes sicherzustellen.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer Querschnittsdarstellung eine Rollenführung gemäß einer ersten Ausführungsform der Erfindung,
- Fig. 2: in einer Querschnittsdarstellung eine Rollenführung gemäß einer zweiten Ausführungsform der Erfindung,
- Fig. 3: in einer Querschnittsdarstellung eine Rollenführung gemäß einer dritten Ausführungsform der Erfindung, und

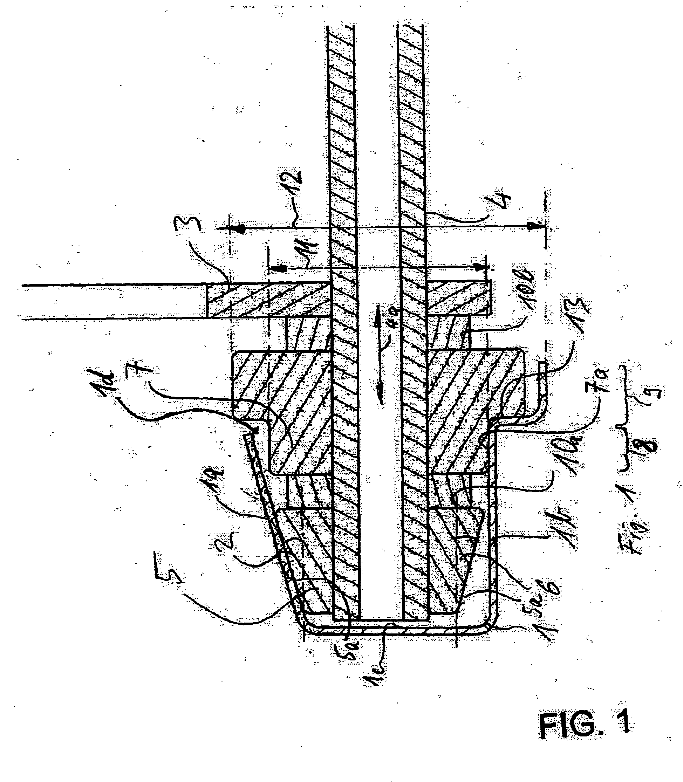

In Fig. 1 wird im Querschnitt eine Rollenführung gemäß einer ersten Ausführungsform der Erfindung gezeigt. Wie dieser Darstellung zu entnehmen ist, weist die Führungsschiene 1 einen trapezförmigen Querschnitt auf, der eine erste Schenkelseite 1a, eine zweite Schenkelseite 1b und eine die Grundlinie des Trapez darstellende stirnseitige Seite 1c umfasst. Im Bereich einer vierten die zweite Grundlinie des Trapezes darstellenden Seite 1d ist die Führungsschiene offen ausgebildet. Diese Seite ist zu der Fahrzeugsitzmitte hingewandt.

Die erste Schenkelseite 1 a ist gegenüber einer Achsenausrichtung mit einem Winkel 2 ausgerichtet. Eine Abstützebene 3 dient zur Verbindung des restlichen hier nicht gezeigten Fahrzeugsitzes mit der Rollenführung.

Die Abstützebene 3 ist ebenso wie die erste Laufrolle 5 und die zweite Laufrolle 7 auf einer Achse 4 angeordnet. Die erste und zweite Laufrolle 5, 7 sind auf der Achse wälz- oder gleitgelagert. Die erste Laufrolle 5 weist eine Lauffläche 5a auf, deren Oberfläche kegelförmig derart ausgebildet ist, dass sie mit der Achsenausrichtung einen Winkel 6 einschließt, welcher dem Winkel 2 zum Anliegen der Lauffläche an der Schenkelseite 1a entspricht.

Eine Lauffläche 7a der zweite Laufrolle 7 ist ebenso wie die Schenkelseite 1b parallel zu der Achsenrichtung ausgerichtet und liegt im Gegensatz zu der ersten Laufrolle 5 nicht an der Schenkelseite 1a, sondern an der Schenkelseite 1b an.

Die zweite Laufrolle 7 besteht aus einem ersten Abschnitt 8 und einem zweiten schulterförmigen Abschnitt 9.

Zwischen den Laufrollen 5, 7 ist zu deren dauerhaften Beabstandung mindestens ein Federelement 10a und zwischen der Laufrolle 7 und der Abstützebene 3 ist zu deren dauerhafte Beabstandung eine Ringscheibe 10b angeordnet.

Der erste Abschnitt 8 der zweiten Laufrolle 7 weist einen Durchmesser 11 auf, der geringer als ein Durchmesser 12 des zweiten schulterförmigen Abschnittes ist. Der schulterförmige Abschnitt 12 läuft mit seiner Schulter entlang einer Stützfläche 13 der Führungsschiene, welche parallel zu den Grundlinien des Trapezes ausgerichtet ist. Hierdurch kann eine Aufnahme von axialen Kräften von der Fahrzeugsitzmitte weg nach Außen bewirkt werden.

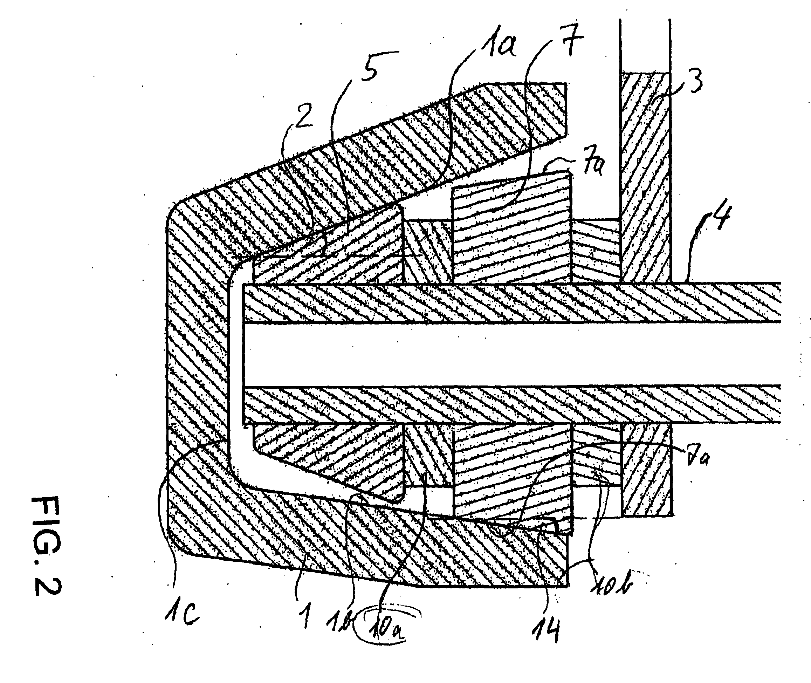

In Fig. 2 ist in einer Querschnittsdarstellung eine zweite Ausführungsform der Erfindung gezeigt. Die darin gezeigte Rollenführung besteht wiederum aus der Führungsschiene 1, welche innenseitig den trapezförmigen Aufbau mit den Schenkelseiten 1a und 1 b sowie der Stirnseite 1c, die eine Grundlinie des Trapezes darstellt, aufweist.

Der Aufbau gemäß der zweiten Ausführungsform der Erfindung unterscheidet sich von dem Aufbau der ersten Ausführungsform der Erfindung darin, dass die Lauffläche 7a der zweiten Laufrolle 7 ebenso wie die Schenkelseite 1b nicht parallel zur Verlaufsrichtung der Achse 4 sondern mit einem Winkel 14 ausgerichtet ist. Der Winkel 14 liegt beispielsweise in einem Bereich von 5°, wohingegen der Winkel 2 der ersten Schenkelseite und der Lauffläche 5a der ersten Laufrolle in einem Bereich von 10° liegt. Da der erste Winkel 2 größer als der zweite Winkel 14 ist, kann die erste Laufrolle 5 an der ersten Schenkelseite 1a mit einer Laufrichtung entlangrollen, ohne dass die Lauffläche 7a der zweiten Laufrolle 7 diese gegenüber ihrer Laufrichtung entgegengesetzte Laufrichtung beeinträchtigt bzw. behindert.

Zwischen der Laufrolle 7 und der Abstützebene 3 müssen mindestens zwei Federelemente 10b und zwischen den beiden Laufrollen 5 und 7 muss mindestens ein Federelement angeordnet sein.

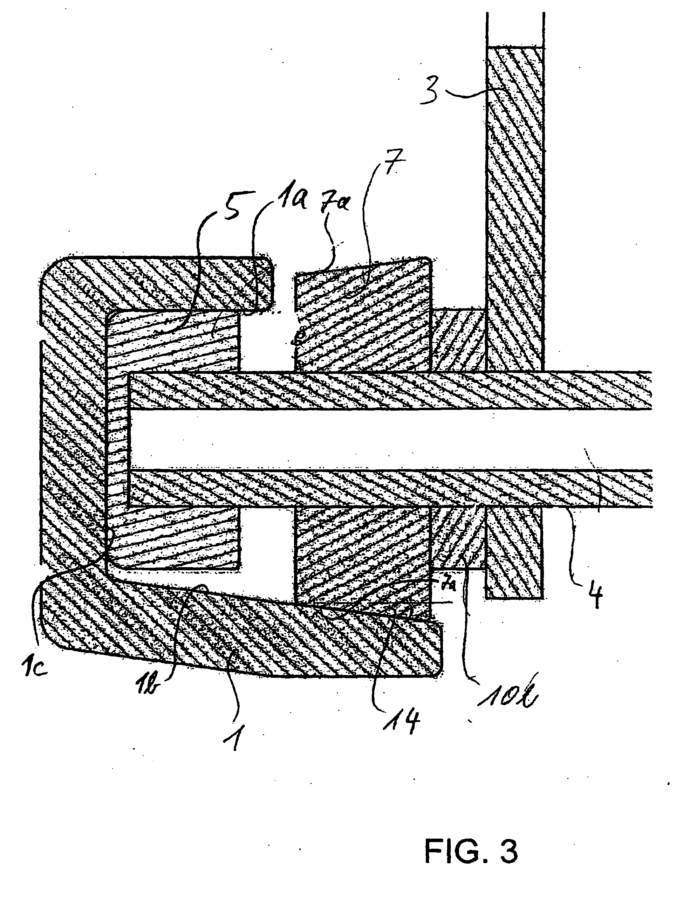

In Fig. 3 ist in einer Querschnittsdarstellung eine dritte Ausführungsform der Erfindung wiedergegeben. Innerhalb der Führugnsschiene 1, die zumindest teilweise trapezförmig ausgebildet ist, auch wenn sie eine verlängerte Schenkelseite 1 b aufweist, wird an der Schenkelseite 1a die Laufrolle 5 abgerollt. Die Laufrolle 5 ist zugleich stirnseitig auf der Achse 4 mittels eines Gleit- oder Wälzlagers angeordnet, so dass durch die Laufrolle 5 Radialkräfte der Achse 4 aufgenommen werden können. Die zweite Laufrolle 7 hingegen weist wiederum in ihrer Lauffläche 7a einen Winkel 14 auf, welcher zusätzlich zu der Aufnahme von Axialkräften der Achse 4 durch die Rolle 5 die Rolle 7ergänzend geringe Axialkräfteanteile aufnehmen lässt. Die Lauffläche 7a der zweiten Laufrolle 7 rollt an der Schenkelseite 1 b ab, wohingegen die Lauffläche 5a der ersten Laufrolle 5 an der Schenkelseite 1a abrollt. 10b ist wiederum ein Federelement.

### Bezugszeichenliste

- 1, 15: Führungsschiene
- 1a: erste Schenkelseite, erste Innenwand
- 1b: zweite Schenkelseite, zweite Innenwand
- 1c: Stirnseite
- 1d: offene Seite der Führungsschiene
- 2, 6, 16, 19: erster Winkel
- 3: Sitzgestellteil
- 4, 18, 20: Achse
- 4a, 20a: Längsverlauf der Achse
- 5, 17: erste Laufrolle
- 5a, 17a: Lauffläche der ersten Laufrolle
- 7, 21: zweite Laufrolle
- 7a, 21a: Lauffläche der zweiten Laufrolle
- 8: erster Abschnitt der zweiten Laufrolle
- 9: zweiter Abschnitt der zweiten Laufrolle
- 10a, 10b, 24a, 24b: Federelement, Ringscheibe
- 11: Durchmesser des ersten Abschnitts der zweiten Laufrolle
- 12: Durchmesser des zweiten Abschnitts der zweiten Laufrolle
- 13: Stützfläche
- 14,22,23: zweiter Winkel
- 15a: erste Innenwand
- 15b: zweite Innenwand
- 15c: Stirnseite
- 15d: weitere Innenwand

## Patentansprüche

1. Rollenführung für verstellbare Fahrzeugsitze mit mindestens einer zumindest teilweise seitlich offenen Führungsschiene (1, 15) und mit mindestens zwei in der Führungsschiene (1, 15) abrollenden mit dem Fahrzeugsitz über mindestens eine Achse (4, 20) verbundenen Laufrollen (5, 7; 17, 21), wobei eine Lauffläche (5a, 17a) einer ersten Laufrolle (5, 17) der Laufrollen (5, 7; 17, 21) an einer Innwand (1a, 1b, 15a, 15b) der Führungsschiene (1, 15) und eine Lauffläche (7a, 21 a) einer zweiten Laufrolle (7, 21) der Laufrollen (5, 7; 17, 21) an einer anderen Innwand (1a, 1b, 15a, 15b) der Führungsschiene (1, 15) anliegen,
**dadurch gekennzeichnet, dass**
mindestens eine der ersten (5, 17) und zweiten Laufrollen (7, 21) kegel- oder kegelstumpfförmig ausgebildet ist, deren Kegelmantel als die Lauffläche (5a, 7a, 17a, 21a) der ersten (5, 17) und/oder zweiten Laufrolle (7, 21) entlang der mit einem Winkel (2, 6, 14, 16, 19, 22, 23) zum Längsverlauf (4a, 20a) der Achse (4, 20) angeordneten Innenwand (1a, 1b, 15a, 15b) der Führungsschiene (1, 15) abrollbar ist, wobei ein erster Schenkel (1a, 15a) der im Querschnitt mindestens teilweise trapezförmigen Führungsschiene (1, 15) einen ersten Winkel (2, 6, 16) und ein zweiter Schenkel (1b, 15c) einen zum ersten Winkel (2, 6, 16) unterschiedlichen zweiten Winkel (14, 19) mit dem Längsverlauf (4a, 20a) der Achse (4, 20) einschließen.

2. Rollenführung nach Anspruch 1,.
**dadurch gekennzeichnet, dass**
die Lauffläche (5a) der ersten Laufrolle (5) an dem ersten Schenkel (1a) der Führungsschiene (1) und die Lauffläche (7a) der zweiten Laufrolle (7) an dem zweiten Schenkel (1b) der Führungsschiene (1) anliegen.

3. Rollenführung nach Anspruch 1,
**dadurch gekennzeichnet, dass**
der erste Winkel (2) in einem Winkelbereich von 1° - 80° und der zweite Winkel (14) in einem Winkelbereich von 0° - 80° oder der erste Winkel (2) in einem Winkelbereich von 0° - 80° und der zweite Winkel (14) in einem Winkelbereich von 1° - 80° liegen.

4. Rollenführung nach einem der vorangegangenen Ansprüche,
**dadurch gekennzeichnet, dass**
die zweite Laufrolle (7) gegenüber der ersten Laufrolle (5) einen gleichen oder größeren Durchmesser (11, 12) aufweist.

5. Rollenführung nach einem der vorangegangenen Ansprüche,
**dadurch gekennzeichnet, dass**
die zweite Laufrolle (7) zur zusätzlichen Aufnahme von Axialkräften einen schulterförmigen Abschnitt (9) aufweist, dessen Durchmesser (12) größer als der Durchmesser (11) der restlichen Laufrolle (7) ist und der an einer zur Fahrzeugsitzmitte hin gerichteten Stützfläche (13) der Führungsschiene (1) anliegt.

6. Rollenführung nach Anspruch 1,
**dadurch gekennzeichnet, dass**
beide Laufrollen (17, 21) kegel- oder kegelstumpfförmig mit gleichen Kegelmantelflächen und deren gleichen Neigung ausgebildet sind, wobei die Kegelmantelflächen als Laufrollen an verschiedenen komplementär zu den Kegelmantelflächen ausgebildeten Innenwänden (15a, 15b) der Führungsschiene (15) abrollbar sind.

7. Rollenführung nach einem der vorangegangenen Ansprüche,
**dadurch gekennzeichnet, dass**
zwischen dem ersten und der zweiten Laufrolle (5, 7) mindestens ein Federelement (10a, 10b) zur federnden Beabstandung der beiden Laufrollen (5, 7) angeordnet ist.

8. Rollenführung nach einem der vorangegangenen Ansprüche,
**dadurch gekennzeichnet, dass**
die erste und die zweite Laufrolle (5, 7; 17, 21) auf zwei getrennten Achsen gelagert sind.

## Claims

1. Roller guide for adjustable vehicle seats, comprising at least one guide rail (1, 15) which is at least partially open at the side and at least two rollers (5, 7; 17, 21) which roll in the guide rail (1, 15) and are connected to the vehicle seat via at least one axle (4, 20), wherein a bearing surface (5a, 17a) of a first roller (5, 17) of the rollers (5, 7; 17, 21) bears on an inner wall (1a, 1b, 15a, 15d) of the guide rail (1, 15) and a bearing surface (7a, 21 a) of a second roller (7, 21) of the rollers (5, 7; 17, 21) bears on another inner wall (1 a, 1b, 15a, 15b) of the guide rail (1, 15) **characterized in that** at least one of the first (5, 17) and second rollers (7, 21) is shaped like a cone or a truncated cone, the cone surface of which can roll as the bearing surface (5a, 7a, 17a, 21 a) of the first (5, 17) and/or second roller (7, 21) along the inner wall (1a, 1b, 15a, 15b) of the guide rail (1, 15), said inner wall being arranged at an angel (2, 6, 14, 16, 19, 22, 23) with respect to the longitudinal course (4a, 20a) of the axle (4, 20), wherein a first side (1a, 15a) of the guide rail (1, 15) with an at least partially trapezium-shaped cross section encloses a first angle (2, 6, 16) and a second side (1b, 15c) encloses a second angle (14, 19), different from the first angle (2, 6, 16), with the longitudinal course (4a, 20a) of the axle (4).

2. Roller guide according to Claim 1,
**characterised in that**
the bearing surface (5a) of the first roller (5) bears on the first side (1a) of the guide rail (1) and the bearing surface (7a) of the second roller (7) bears on the second side (1 b) of the guide rail (1).

3. Roller guide according to Claim 1,
**characterised in that**
the first angle (2) lies in an angle range of 1° - 80° and the second angle (14) lies in an angle range of 0° - 80° or the first angle (2) lies in an angle range of 0° - 80° and the second angle (14) lies in an angle range of 1° - 80°.

4. Roller guide according to any of the preceding claims, **characterized in that** the diameter (11, 12) of the second roller (7) is the same as or greater than that of the first roller (5).

5. Roller guide according to any of the preceding claims, **characterized in that** the second roller (7) has a shoulder-like portion (9) to additionally absorb axial forces, the diameter (12) of said shoulder-like portion being greater than the diameter (11) of the rest of the roller (7) and said shoulder-like portion bearing against a support surface (13) of the guide rail (1) which is directed towards the centre of the vehicle seat.

6. Roller guide according to Claim 1, **characterized in that** both rollers (17, 21) are shaped as cones or truncated cones with identical cone surfaces and the same inclination thereof, wherein the cone surfaces can roll as rollers on different inner walls (15a, 15b) of the guide rail (15) which are designed in a manner complementary to the cone surfaces.

7. Roller guide according to any of the preceding claims, **characterized in that** at least one spring element (10a, 10b) for the resilient spacing of the two rollers (5, 7) is arranged between the first and second rollers (5, 7).

8. Roller guide according to any of the preceding claims, **characterized in that** the first and second rollers (5, 7; 17, 21) are mounted on two separate axles.

## Revendications

1. Guidage à galets pour sièges de véhicules réglables, comprenant au moins un rail de guidage (1, 15) au moins partiellement ouvert latéralement et au moins deux galets de roulement (5, 7 ; 17, 21) se déplaçant dans le rail de guidage (1,15) et reliés au siège de véhicule par au moins un axe (4, 20), dans lequel une surface de roulement (5a, 17a) d'un premier galet de roulement (5, 17) des galets de roulements (5, 7 ; 17, 21) s'applique sur une paroi interne (1a, 1b, 15a, 15b) du rail de guidage (1, 15) et une surface de roulement (7a, 21a) d'un second galet de roulement (7, 21) des galets de roulement (5, 7 ; 17, 21) s'applique sur une autre paroi interne (1a, 1b, 15a, 15b) du rail de guidage (1, 15), **caractérisé en ce que**
au moins un des premier (5, 17) et second (7, 21) galets de roulement se présente sous la forme d'un cône ou d'un tronc de cône, dont l'aire latérale conique comme surface de roulement (5a, 7a, 17a, 21a) du premier (5,17) et/ou du second galets de roulement (7, 21) peut rouler le long de la paroi interne (1a, 1b, 15a, 15b) du rail de guidage (1, 15) aménagée sous un certain angle (2, 6,14,16, 19, 22, 23) par rapport à l'extension longitudinale (4a, 20a) de l'axe (4, 20), dans lequel une première branche (1a, 15a) du rail de guidage (1, 15) au moins en partie trapézoïdal en section transversale inclut un premier angle (2, 6, 16) et une seconde branche (1b, 15c) un second angle (14, 19) différent du premier angle (2, 6, 16) avec l'extension longitudinale (4a, 20a) de l'axe (4, 20).

2. Guidage à galets selon la revendication 1,
**caractérisé en ce que**
la surface de roulement (5a) du premier galet de roulement (5) s'applique sur la première branche (1a) du rail de guidage (1) et la surface de roulement (7a) du second galet de roulement (7) s'applique sur la seconde branche (1b) du rail de guidage (1).

3. Guidage à galets selon la revendication 1,
**caractérisé en ce que**
le premier angle (2) se situe dans une plage angulaire de 1 ° à 80 ° et le second angle (14) dans une plage angulaire de 0 ° à 80 ° ou bien le premier angle (2) se situe dans une plage angulaire de 0 ° à 80 ° et le second angle (14) dans une plage angulaire de 1 ° à 80 °.

4. Guidage à galets selon l'une quelconque des revendications précédentes,
**caractérisé en ce que**
le second galet de roulement (7) présente un diamètre (11, 12) supérieur ou égal à celui du premier galet de roulement (5).

5. Guidage à galets selon l'une quelconque des revendications précédentes,
**caractérisé en ce que**
le second galet de roulement (7) présente pour l'absorption supplémentaire de forces axiales une section (9) en forme d'épaulement, dont le diamètre (12) est supérieur au diamètre (11) du galet de roulement (7) restant et qui s'applique sur une surface d'appui (13) du rail de guidage (1) dirigée vers le centre du siège du véhicule.

6. Guidage à galets selon la revendication 1,
**caractérisé en ce que**
les deux galets de roulement (17, 21) se présentent sous la forme d'un cône ou d'un tronc de cône avec des aires latérales coniques identiques et leur inclinaison identique, dans lequel les aires latérales coniques peuvent rouler comme galets de roulement sur diverses parois internes (15a, 15b) du rail de guidage (15) conformées de manière complémentaire aux aires latérales coniques.

7. Guidage à galets selon l'une quelconque des revendications précédentes,
**caractérisé en ce que**
entre le premier et le second galet de roulement (5, 7), on agence au moins un élément à ressort (10a, 10b) pour l'écartement élastique des deux galets de roulement (5, 7).

8. Guidage à galets selon l'une quelconque des revendications précédentes,
**caractérisé en ce que**
le premier et le second galet de roulement (5, 7 ; 17, 21) sont montés sur deux axes séparés.
